(19) **Europäisches Patentamt European Patent Office Office européen des brevets**

(11) **EP 2 517 038 B1**

(12) **FASCICULE DE BREVET EUROPEEN**

(45) Date de publication et mention de la délivrance du brevet:
**22.04.2015 Bulletin 2015/17**

(21) Numéro de dépôt: **10798812.3**

(22) Date de dépôt: **22.12.2010**

(51) Int Cl.:
*G01S 3/74* *(2006.01)*      *H04L 25/03* *(2006.01)*

(86) Numéro de dépôt international:
**PCT/EP2010/070524**

(87) Numéro de publication internationale:
**WO 2011/076864 (30.06.2011 Gazette 2011/26)**

(54) **PROCEDE ET DISPOSITIF DE GONIOMETRIE DE SIGNAUX INTERFERANT UN SIGNAL UTILE MODULE PAR PLUSIEURS PORTEUSES**

VERFAHREN UND VORRICHTUNG ZUR GONIOMETRIE VON MIT EINEM VON MEHREREN TRÄGERN MODULIERTEN NÜTZLICHEN SIGNAL INTERFERIERENDEN SIGNALEN

METHOD AND DEVICE FOR GONIOMETRY OF SIGNALS INTERFERING WITH A USEFUL SIGNAL MODULATED BY PLURALITY OF CARRIERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2009 FR 0906269**

(43) Date de publication de la demande:
**31.10.2012 Bulletin 2012/44**

(73) Titulaire: **Thales**
**92200 Neuilly Sur Seine (FR)**

(72) Inventeur: **PIPON, François**
**F-92704 Colombes Cedex (FR)**

(74) Mandataire: **Labatte, Laurent**
**Marks & Clerk France**
**Immeuble Visium**
**22, avenue Aristide Briand**
**94117 Arcueil Cedex (FR)**

(56) Documents cités:
**EP-A1- 0 665 665       FR-A1- 2 764 074**
**FR-A1- 2 854 290       US-A1- 2008 049 598**
**US-B2- 7 289 834**

**Description**

La présente invention concerne un procédé et un dispositif de goniométrie de signaux interférant un signal utile modulé par plusieurs porteuses. Elle s'applique en particulier à la goniométrie de signaux parasites présents sur la même bande de fréquence qu'un signal de type OFDM, c'est à dire un signal modulé par répartition de fréquences orthogonales.

Lorsque plusieurs émissions sont reçues sur un même canal de fréquence, seule l'émission de plus forte amplitude peut généralement faire l'objet d'une goniométrie. Or, de nombreuses applications requièrent de pouvoir déterminer la direction d'arrivée de toutes les émissions reçues sur un même canal de fréquence, y compris les émissions reçues avec un faible niveau de puissance, de l'ordre par exemple de 20 ou 25 dB au dessous de l'émission de puissance la plus élevée. A titre d'illustration, on souhaite déterminer l'origine de signaux perturbant un programme de télévision émis sur une forme d'onde de type DVB (« Digital Video Broadcasting »).

Une première catégorie de méthodes connues permettant d'effectuer une goniométrie en présence de plusieurs sources de signaux regroupe les méthodes à haute-résolution et les méthodes à super résolution. Parmi ces méthodes, on peut citer MUSIC, ESPRIT, la méthode du maximum de vraisemblance, ou encore la méthode CAPON. Ces méthodes ne font aucune hypothèse sur la forme d'onde utilisée par les émissions reçues et permettent de séparer N-1 sources de signaux (dans la pratique N/2 sources) avec N antennes associées à N voies de réception. Or, il est parfois souhaitable d'effectuer la goniométrie de multiples sources en utilisant seulement deux voies de réception. Par ailleurs, les méthodes à haute résolution ne sont pas toujours applicables du fait de leur besoin en ressources de calcul.

Une seconde catégorie de méthodes connues concerne la goniométrie sur des signaux interférant une émission à forme d'onde série comportant des séquences connues. Ce type de méthode exploite la connaissance de la forme d'onde des signaux reçus (ou d'une partie des signaux reçus), de manière à améliorer les performances de la goniométrie. Un exemple d'une telle méthode est décrit dans un brevet européen de Thales référencé sous le numéro de publication EP0991952. Cette méthode s'applique cependant plus particulièrement à des formes d'onde à modulation linéaire (par exemple les formes d'onde de type GSM ou UMTS). Or, il est souhaité de pouvoir effectuer une goniométrie sur des signaux interférant des signaux modulés par multiporteuses, comme dans les émissions de type DVB ou WiMax.

Le brevet US 7 289 834 décrit une méthode pour déterminer des poids à affecter à différentes voies d'une antenne active, de manière à former un diagramme satisfaisant pour la réception d'un signal comportant plusieurs porteuses.

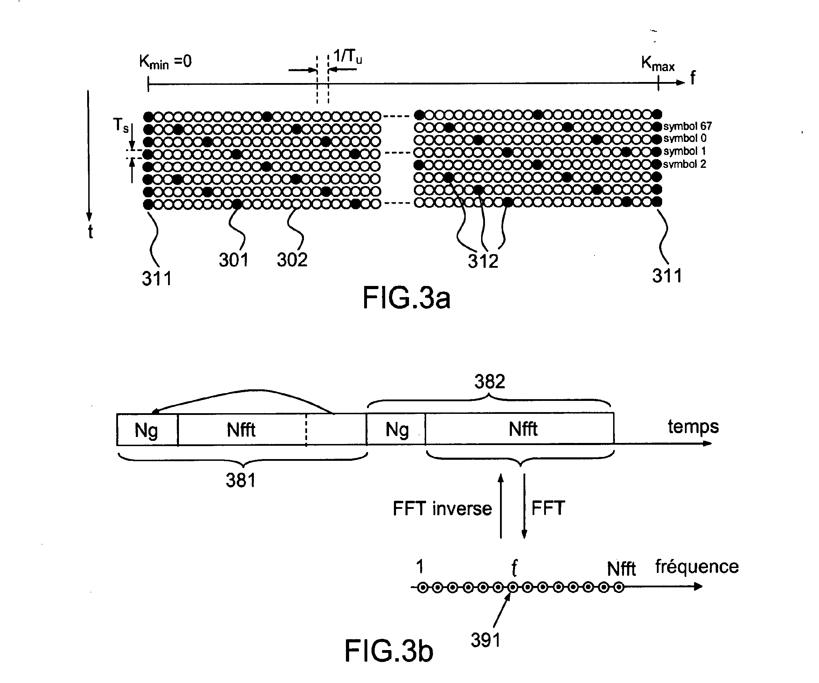

Dans la suite du texte, on désigne par « symbole OFDM » le signal utile transmis correspondant à la sortie de l'opération de transformée de Fourier après numérisation du signal reçu, et par « symbole », les symboles élémentaires, $n$-PSK (modulation par déplacement de phase) ou QAM (modulation d'amplitude en quadrature) par exemple, modulant les sous-porteuses d'un symbole OFDM. Les symboles élémentaires 391 et symboles OFDM 381, 382 sont illustrés en figure 3b. Parmi les symboles (c'est-à-dire les symboles élémentaires), on distingue les symboles connus, permettant la synchronisation, l'apprentissage du canal de propagation et la démodulation, et les symboles de données transportant l'information utile.

Un but de l'invention est de déterminer la direction d'arrivée de signaux interférant un signal modulé sur plusieurs fréquences porteuses et comportant des symboles connus, quelque soit les amplitudes relatives des signaux interférents et dudit signal modulé. A cet effet, l'invention a pour objet un procédé de goniométrie pour déterminer la direction d'arrivée de signaux interférant un signal utile à répartition de fréquences orthogonales comportant des symboles élémentaires connus, les signaux comprenant le signal utile et les signaux interférents étant reçus par un réseau d'antennes alimentant au moins deux voies de réception, le procédé comprenant une étape de numérisation des signaux reçus sur chaque voie de réception, une étape de synchronisation sur les symboles dudit signal utile, une étape de démodulation par transformée de Fourier des signaux numérisés, le procédé étant caractérisé en ce qu'il comprend pour un ou plusieurs symboles issus de l'opération de transformée de Fourier après numérisation du signal reçu par exemple pour une forme d'onde de type OFDM pour un ou plusieurs symboles OFDM, les étapes suivantes :

◦ Estimer, pour chaque voie de réception k, pour chaque symbole OFDM d'indice n, au moins pour chaque sous-poretuse f du signal reçu modulée avec des symboles utiles connus, la contribution $y_k(n, f)$ des signaux interférents au signal reçu à partir desdits symboles élémentaires connus, l'étape d'estimation de la contribution $y_k(n, f)$ des signaux interférents comprenant une première sous-étape d'estimation de la contribution $h_k(f)$ du canal de propagation utile reçu effectuée à partir du signal $z_k(n, f)$ numérisé, puis démodulé par transformée de Fourier et des symboles connus utilisés pour moduler le signal utile, puis une deuxième sous-étape effectuée sous-porteuse par sous-porteuse, de retranchement au signal $Z_k(n, f)$ numérisé puis démodulé par transformée de Fourier d'une estimation de la contribution du signal utile, calculée à partie de ladite estimation de $h_k(f)$ et des symboles connus ou démodulés ;

◦ effectuer une goniométrie sur les signaux interférents à partir des estimations de la contribution $y_k(n, f)$ des signaux interférents effectuées lors de l'étape précédente.

Le procédé selon l'invention s'applique notamment, dans les cas où les signaux interférents proviennent d'une source d'émission différente de la source émettant le signal utile.

Selon une mise en oeuvre du procédé à répartition de fréquences orthogonales utilise la technologie MIMO (« Multiple Input Multiple Output ») ; ce signal est émis à partir de plusieurs voies d'émission distinctes, chacune desdites voies d'émission utilisant ses propres symboles connus pour moduler le signal utile émis, l'étape d'estimation de la contribution des signaux interférents comprenant pour chaque voie d'émission $l$, une première sous-étape d'estimation de la contribution $h_{k,l}(f)$ du signal utile pour au moins chaque sous-porteuse $f$ du signal reçu modulée avec des symboles connus, pour chaque voie de réception $k$, à partir du signal numérisé puis démodulé par transformée de Fourier $z_k(n, f)$ et des symboles connus utilisés pour moduler le signal utile sur ladite voie d'émission $l$, une deuxième sous-étape combinant le signal numérisé puis démodulé par transformée de Fourier $z_k(n, f)$, les estimations $h_{k,l}(f)$ avec les symboles connus de chacune des voies d'émission correspondantes pour produire une estimation de la contribution des signaux interférents.

Selon une mise en oeuvre du procédé selon l'invention, pour une voie de réception d'indice k, l'estimation de la contribution $h_k(f)$ du canal de propagation utile est effectuée sur une sous-porteuse d'indice f en déterminant le rapport suivant :

$$h_k(f) = r_{dzk}(f) \ / \ r_{dd}(f), \quad \text{où} \quad r_{dd}(f) = \sum d(n, f) \cdot d^*(n, f)$$

et

$$r_{dzk}(f) = \sum_n z_k(n, f) \cdot d^*(n, f), \quad z_k(n, \ f)$$

étant le symbole OFDM d'indice n obtenu sur la sous-porteuse d'indice f après démodulation par transformée de Fourier du signal utile à répartition de fréquences orthogonales, d(n, f) étant un symbole élémentaire connu émis sur la sous-porteuse d'indice f pour moduler le symbole OFDM $z_k(n, f)$ d'indice n.

Le procédé de goniométrie peut comprendre une étape d'estimation des symboles transmis sur les sous-porteuses de données à partir du vecteur signal z reçu sur l'ensemble des $K$ voies de réception et de $h(f)$, le vecteur canal de propagation reçu sur l'ensemble des $K$ voies de réception.

Avantageusement, le procédé selon l'invention peut être exécuté pour des signaux interférents dont la puissance est inférieure à la puissance reçue du signal utile, l'écart de puissance pouvant être supérieur à 20 ou 25 dB.

Le procédé selon l'invention peut notamment être appliqué à des goniométries de signaux interférant des émissions de type DVB ou WiMax.

Un avantage du procédé selon l'invention est qu'il permet d'améliorer la précision et la sensibilité d'une goniométrie effectuée sur les signaux de forme d'onde parallèle, par exemple sur les signaux de type OFDM.

D'autres caractéristiques apparaîtront à la lecture de la description détaillée donnée à titre d'exemple et non limitative qui suit faite en regard de dessins annexés qui représentent :

- la figure 1, un premier exemple de mise en oeuvre du procédé selon l'invention ;
- la figure 2, un deuxième exemple de mise en oeuvre du procédé selon l'invention ;
- la figure 3a, un diagramme temps-fréquence illustrant la répartition des sous-porteuses pilotes dans une trame de type DVB-T ;
- la figure 3b, une représentation d'un symbole OFDM et de symboles élémentaires,
- la figure 4, un exemple de système sur lequel le procédé selon l'invention peut être mis en oeuvre si un seul signal interférent est présent ;
- la figure 5, un schéma d'un système sur lequel peut être exécuté le procédé selon l'invention avec une méthode à haute résolution ;
- la figure 6, un synoptique illustrant les étapes d'un procédé selon l'invention appliqué à un système de type MIMO.

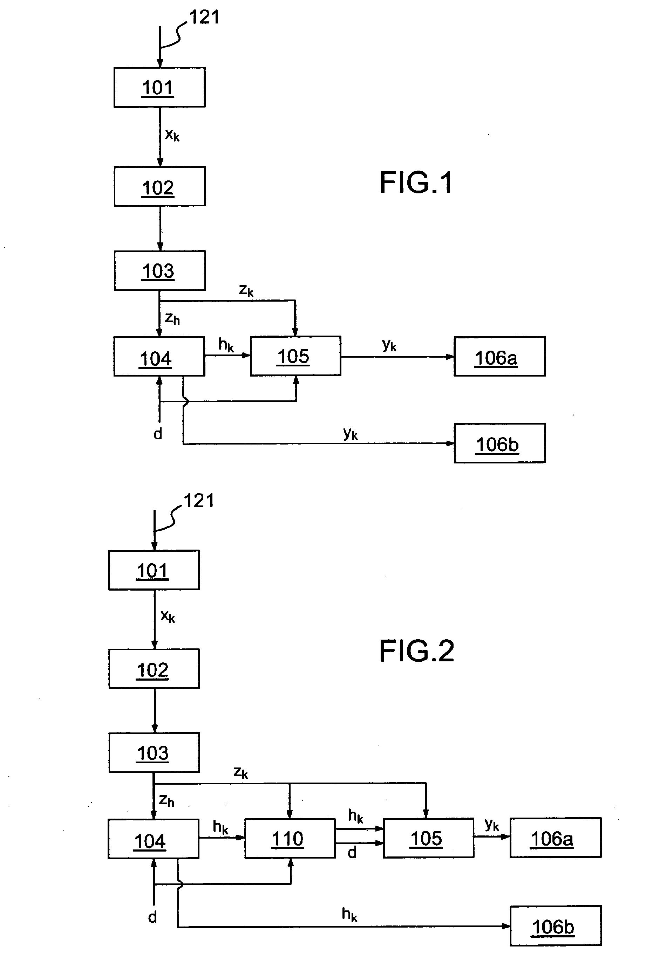

La figure 1 présente un premier exemple de procédé selon l'invention. Des signaux 121 sous forme d'ondes électromagnétiques sont reçus et transmis à un récepteur radioélectrique comportant $K$ voies de réception. Ces signaux reçus comportent à la fois un signal utile modulé selon une forme d'onde de type OFDM et également un signal interférant ce signal utile sur au moins une partie de sa bande de fréquence. Le signal utile comprend des symboles connus émis sur certaines fréquences porteuses, qualifiées par la suite de « porteuses pilotes ». Les autres fréquences porteuses du signal utile OFDM, appelées par la suite « porteuses de données » sont modulées avec des données.

La première étape 101 du procédé selon l'invention transpose le signal reçu 121 en bande de basé et numérise le signal reçu 121 sur chaque voie de réception selon des techniques connues de l'Homme du métier.

La deuxième étape 102 effectue une synchronisation du récepteur sur le signal numérisé $x_k$ obtenu en sortie de la première étape 101. La synchronisation peut notamment s'effectuer en utilisant le procédé décrit dans le brevet européen de la société Thales et référencé sous le numéro de publication EP0665665 qui permet d'effectuer une prise de synchronisation en présence d'interférence.

La troisième étape 103 est une étape de démodulation par transformée de Fourier du signal numérisé. Sur chaque symbole OFDM d'indice $n$ et pour chaque voie de réception $k$, une transformée de Fourier (FFT) est appliquée sur le signal numérisé $x_k$ comme suit :

$$z_k(n, f) = \text{FFT}(x_k(((n-1)^*(N_{FFT}+N_g) +N_g :n^*(N_{FFT}+N_g))),$$

où le terme $z_k(n, f)$ représente le symbole démodulé, $f$ étant l'indice de la sous-porteuse, $N_{FFT}$ la taille de la FFT qui est un paramètre de la forme d'onde du signal utile, $N_g$ étant le temps de garde.

La quatrième étape 104 est une étape d'estimation de la contribution $h_k(f)$ du canal de propagation utile, sur chaque porteuse f correspondant à un symbole connu, et pour chaque voie de réception k. Par exemple, pour une voie de réception k et la sous-porteuse d'indice f, cette estimation $h_k(f)$ est effectuée via le critère suivant :

$$h_k(f) = r_{dzk}(f) / r_{dd}(f)$$

où

$$r_{dd}(f) = \sum_n d(n,f) \cdot d^*(n,f) \quad \text{et} \quad r_{dzk}(f) = \sum_n z_k(n,f) \cdot d^*(n,f)$$

d(n, f) étant un symbole connu émis sur la sous-porteuse pilote d'indice f du symbole OFDM d'indice n.

La cinquième étape 105 estime la contribution des signaux interférents en retranchant aux signaux reçus la partie estimée du signal utile sur chaque sous-porteuse f. Ainsi, pour chaque symbole OFDM d'indice n, pour chaque voie de réception k et pour chaque porteuse correspondant à un symbole connu, est effectuée l'estimation suivante :

$$y_k(n,f) = z_k(n,f) - h_k(f)^*d(n,f)$$

où le terme $y_k(n,f)$ représente la contribution des signaux interférents sur le symbole d'indice n reçu sur la voie de réception k sur la porteuse f, le terme zk(n,f) représentant le symbole d'indice n du signal reçu démodulé par transformée de Fourier, par exemple par FFT (transformée de Fourier rapide).

Comme illustré en figure 1, le procédé selon l'invention permet d'isoler la contribution des signaux interférents pour effectuer leur goniométrie 106a comme si le signal utile OFDM était absent. Outre une goniométrie des signaux interférents, une goniométrie 106b du signal utile OFDM peut être effectuée avec une précision et une sensibilité accrue.

La figure 2 illustre un deuxième exemple de mise en oeuvre du procédé selon l'invention.

Dans le cas où les sous-porteuses pilotes sont réparties parmi les sous-porteuses de données, on peut estimer la contribution du canal utile $h_k(f)$ sur les sous-porteuses de données en effectuant une interpolation à partir de l'estimation du canal utile effectuée sur les sous-porteuses pilotes. Par exemple, dans le cas d'une forme d'onde de type DVB, une sous-porteuse sur trois est une sous-porteuse pilote, ce qui permet d'effectuer une interpolation et d'estimer la contribution du canal utile sur les sous-porteuses de données intercalées entre les sous-porteuses pilotes. Dans d'autres formes d'ondes, par exemple les formes d'onde de type WiMAX, un symbole placé en début de trame ne comporte que des sous-porteuses pilotes, les autres symboles comportant quasiment uniquement des sous-porteuses de données (et parfois quelques sous-porteuses pilotes pour assurer le suivi du canal).

La figure 3a illustre, à travers un diagramme temps-fréquence, la répartition des sous-porteuses pilotes dans une trame de type DVB-T. Les sous-porteuses pilotes sont représentées par des disques pleins 301, tandis que les sous-porteuses de données sont représentées par des cercles 302. Dans un signal de forme d'onde DVB-T, les sous-porteuses pilotes sont insérées comme suit :

- des « continuai pilots » ou sous-porteuses pilotes fixes 311 sont présentes au même emplacement (c'est-à-dire à la même fréquence) sur chaque symbole,
- des « scattered pilot » ou sous-porteuses pilotes 312 réparties sont régulièrement espacées toutes les 12 sous-porteuses et leur fréquence varie d'un symbole à l'autre (décalages de 3 sous-porteuses pour une périodicité de 4 symboles).

Les autres sous-porteuses sont des porteuses de données.

Comme illustré en figure 2, une étape optionnelle 110 du procédé consiste à estimer les symboles transmis sur les sous-porteuses de données. Soit d(n,f) le symbole transmis sur la sous-porteuse f du symbole OFDM n. Le symbole d(n,f) peut être estimé, par exemple, à partir de z(n,f), le vecteur signal reçu sur l'ensemble des K voies de réception et de h(f), le vecteur canal de propagation reçu sur l'ensemble des K voies de réception, de la façon suivante :

$$\tilde{d}[n,f] = \tilde{h}[n,f]^{H} / \left( \tilde{h}[n,f]^{H} \tilde{h}[n,f] \right) z[n,f]$$

avec :

$$z[n,f] = [z_1[n,f], z_2[n,f], \ldots, z_K[n,f]]^{T}$$

$$h[f] = [h_1[f], h_2[f], \ldots, h_K[f]]^{T}$$

Le symbole d(n,f) peut également être estimé en utilisant une méthode décrite dans le brevet français référencé sous le numéro de publication FR2854290 qui permet la démodulation d'une forme d'onde OFDM en présence d'interférences.

L'intérêt d'effectuer l'étape optionnelle 110 est qu'elle permet de pouvoir utiliser également les symboles de données pour estimer la contribution des signaux interférents : en sortie de l'étape 110, l'étape 105 d'estimation de la contribution des signaux interférents peut être effectuée sur toutes les sous-porteuses *f* par la formule :

$$y_k(n,f) = z_k(n,f) - h_k(f)^* d(n,f)$$

où d(n,f) représente, suivant la porteuse *f* et le symbole OFDM *n* , soit un symbole de données, démodulé lors de l'étape 110, soit un symbole pilote.

Si un seul signal interférent est présent, le procédé selon l'invention permet de déterminer sa direction d'arrivée en utilisant, par exemple, une méthode de goniométrie telle que l'interférométrie, la corrélation vectorielle, ou la formation de voies.

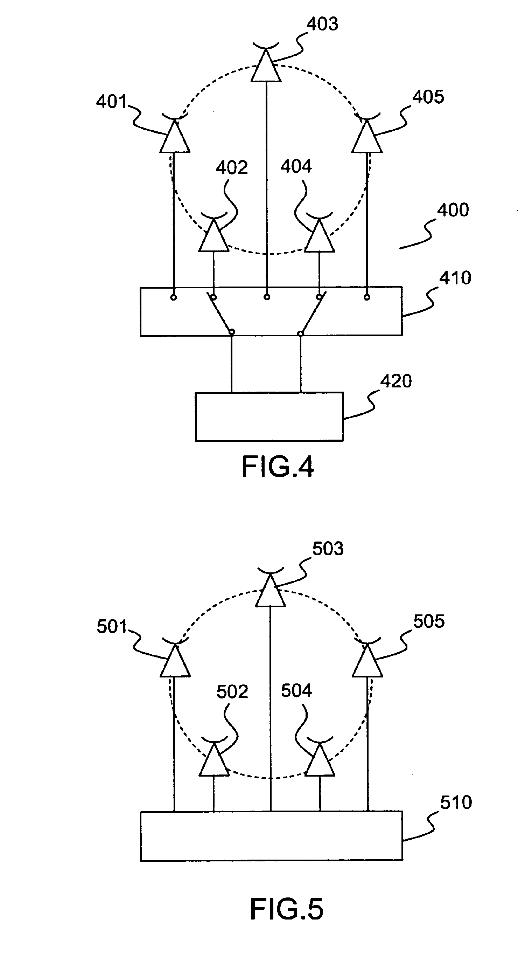

La figure 4 présente un premier exemple de système sur lequel le procédé selon l'invention peut être mis en oeuvre si un seul signal interférent est présent. Le système 400 comprend, dans l'exemple, cinq antennes 401, 402, 403, 404, 405 de réception réparties aux coins d'un polygone régulier. Toutes les antennes 401, 402, 403, 404, 405 sont raccordées à un module de commutation 410 permettant de sélectionner les signaux reçus par deux antennes choisies parmi les cinq 401, 402, 403, 404, 405 et d'orienter les signaux sélectionnés vers un module traitement 420 permettant, par exemple, d'effectuer des calculs d'interférométrie. Le module de traitement 420 comprend une chaîne formée respectivement d'un récepteur 421 à deux voies, d'un convertisseur analogique numérique 422, et d'un calculateur 422.

Pour le système 400, le procédé selon l'invention peut sélectionner, par exemple, les couples d'antennes suivants : (première antenne 401 ; troisième antenne 403) (deuxième antenne 402 ; quatrième antenne 404) (troisième antenne 403 ; cinquième antenne 405) (quatrième antenne 404 ; première antenne 401) et (cinquième antenne 405 ; deuxième antenne 402). L'ensemble des couples d'antennes est noté C par la suite.

Un exemple d'exécution du procédé selon l'invention pour le système 400 est maintenant décrit pour une forme d'onde de type DVB-T, c'est-à-dire DVB Terrestre, avec les paramètres suivants : mode 8 K, une bande de 8 MHz et un temps de garde de 1/8, ce qui correspond à 6817 sous-porteuses, Nfft=8192, Ng=1024, Fe=64/7 MHz.

Selon la première étape 101 du procédé, les signaux reçus $x_k$ et $x_m$ sur les deux antennes k et m sont numérisés et translatés en bande de base. La durée d'acquisition correspond à 8 symboles OFDM.

Ensuite, la deuxième étape 102 du procédé est exécutée. Un critère de synchronisation est déterminé sur une durée correspondant à quatre symboles OFDM en utilisant la méthode décrite dans le brevet européen référencé sous le numéro de publication EP0665665. La séquence de synchronisation est formée à partir des sous-porteuses pilotes (signal temporel provenant de la transformée de Fourier inverse des porteuses pilotes dispersées, les autres porteuses étant mises à zéro, en ajoutant l'intervalle de garde Ng) et ce sur quatre symboles OFDM consécutifs. Le critère de synchronisation peut s'écrire de la façon suivante :

$$c(n) = \frac{1}{\|d\|^2} \hat{\mathbf{r}}_{xd}^{H}(n) \hat{\mathbf{R}}_{xx}^{-1}(n) \hat{\mathbf{r}}_{xd}(n)$$

avec :

$$\|d\|^2 = \sum_{k=0}^{N-1} |d(k)|^2 \qquad \hat{\mathbf{r}}_{xd}(n) = \sum_{k=0}^{N-1} \mathbf{x}(n+k) d^{*}(k) \qquad \hat{\mathbf{R}}_{xx}(n) = \sum_{k=0}^{N-1} \mathbf{x}(n+k) \mathbf{x}^{H}(n+k)$$

$$N = 4 * (Nfft+Ng)$$

$$\mathbf{x}(n) = [x_k(n) \; ; \; x_m(n)]^{\mathsf{T}}$$

On note maintenant $n0$ la position de synchronisation choisie de façon à prendre en compte l'ensemble des trajets de propagation dans l'intervalle de garde.

Selon la troisième étape 103 du procédé, on effectue la transformée de Fourier sur les signaux reçus sur les voies k et m sur quatre symboles suivant la position de synchronisation n0 :

$$z_k(n, f) = FFT(x_k(n0+(n-1)*(N_{FFT}+N_g) +N_g : n0+n*(N_{FFT}+N_g)))$$

$$z_m(n, f) = FFT(x_m(n0+(n-1)*(N_{FFT}+N_g) +N_g : n0+n*(N_{FFT}+N_g)))$$

Selon la quatrième étape 104 du procédé, la contribution du canal de propagation $h_k(f)$ et $h_m(f)$ sur chaque porteuse f est déterminée pour la voie de réception k et pour la voie de réception m. Ainsi, sur chacune des porteuses pilotes dispersées (1 porteuse sur 12), on effectue l'estimation de canal par la formule

$$h_k(f) = r_{dzk}(f) / r_{dd}(f)$$

où

$$r_{dd}(f) = \sum_{n=0}^{1} d(p+4n,f) \, d^{*}(p+4n,f)$$

et

$$r_{dzk}(f) = \sum_{n=0}^{1} z_k(p+4n,f) \, d^{*}(p+4n,f)$$

avec p = 1 à 4 pour tenir compte de la périodicité de la position des sous-porteuses pilotes dispersées sur quatre symboles.

$$\text{Et } f = 1+3*(p-1)+12*l$$

A l'issue de cette opération, les coefficients $h_k(f)$ sont donc estimés toutes les trois sous-porteuses. Ensuite, une interpolation est mise en oeuvre pour obtenir l'estimation des coefficients $h_k(f)$ sur toutes les sous-porteuses.

L'étape 110 d'estimation des symboles transmis sur les sous-porteuses de données est exécutée, comme expliquée plus haut. Sur chaque sous-porteuse de données, la décision des symboles est réalisée en tenant compte de la constellation (QPSK, 16-QAM ou 64-QAM).

Selon la cinquième étape 105, on estime la contribution des signaux interférents sur les voies de réception k et m, selon la méthode expliquée plus haut, en utilisant l'ensemble des sous-porteuses (sous-porteuses de données et sous-porteuses pilotes).

Ensuite, aux fins d'effectuer une goniométrie par interférométrie, on effectue les étapes suivantes : pour chaque couple d'antennes (k ; m), sur les signaux $y_k(n,f)$ et $y_m(n,f)$ issus du procédé selon l'invention :

- dans un premier temps, on estime, pour chaque couple d'antennes (k ;m), des différences de phase entre les signaux reçus par ces antennes k, m, différences de phase notées $\Delta\phi^{mesuré}_{k,m}$, entre les signaux $x_k(n)$ et $x_m(n)$ reçus sur les deux antennes k et m. Cette différence de phase s'estime en utilisant les signaux estimés $y_k(n,f)$ et $y_m(n,f)$ issus du procédé selon l'invention, par exemple, via la formule suivante :

$$\Delta\phi^{mesuré}(k,m) = \text{phase} \left( \sum_{n=1}^{8} \sum_{f=1}^{6817} y_k(n,f) \cdot y_m^{*}(n,f) \right)$$

- dans un deuxième temps, on recherche la direction d'arrivée (azimut et/ou site) correspondant au jeu des cinq différences de phase mesurées : pour chaque direction d'arrivée (DOA), les différences de

phase théoriques entre les antennes k et m sont notées $\Delta\phi^{théo}_{k,m}(DOA)$ et sont obtenues par des méthodes connues de l'homme du métier faisant intervenir si nécessaire une calibration du réseau d'antennes. Ensuite, un algorithme recherche la direction d'arrivée qui minimise l'écart entre les différences de phase théoriques et les différences de phases mesurées sur chaque couple c d'antenne (k,m) de l'ensemble C. Par exemple,

$$DOA = \text{ArgMin} \left\{ \sum_{c \in C} | \Delta_c^{théo}(DOA) - \Delta_c^{mesuré} |^2 \right\}$$

Le procédé selon l'invention rend donc possible, dans un système comportant un réseau de K antennes, K >2, associé à deux voies de réception, la détermination de la direction d'arrivée d'un signal interférent en présence d'un signal utile OFDM.

La goniométrie du signal utile peut également être effectuée par l'algorithme d'interférométrie décrit ci-dessus pour effectuer la goniométrie des signaux interférents en exploitant les différences de phase de $h_k(f)$ et $h_m(f)$, les estimations du canal de propagation utile obtenues sur les voies k et m

$$\Delta\phi^{mesuré}_{k,m} = \text{phase} \left[ \sum_{f=1}^{6817} h_k(f) \cdot h_m^{*}(f) \right]$$

En outre, si le signal utile est reçu suivant plusieurs trajets de propagation, il est aussi possible d'effectuer la goniométrie de chaque trajet utile : on effectue dans un premier temps une FFT inverse pour estimer la réponse impulsionnelle temporelle du canal de propagation comme suit :

$$g_k(n) = FFT^{-1}(h_k(f))$$

La goniométrie est effectuée dans un second temps pour chaque trajet détecté en utilisant les coefficients de $g_k(n)$ pour calculer les différences de phase :

$$\Delta\phi^{mesuré}_{k,m}(n) = \text{phase} \left[ g_k(\text{indice}(n)) \cdot g_m^{*}(\text{indice}(n)) \right]$$

avec $n$ = 1, .., nombre de trajets détectés

indice : tableau contenant les retards des trajets détectés

La détection des trajets peut s'effectuer par exemple à partir du critère de synchronisation ou d'après la valeur de $|g_k(n)|^2$, qui correspond à la puissance du trajet n.

Si plusieurs signaux interférents sont présents, l'exécution d'une méthode à haute résolution, placée en sortie de la cinquième étape 105 d'estimation des signaux interférents, permet d'effectuer leur goniométrie en présence d'un signal utile OFDM avec de meilleures performances que si le procédé selon l'invention n'était pas mis en oeuvre.

Un système sur lequel peut être exécuté le procédé selon l'invention avec une méthode à haute résolution est schématiquement représenté en figure 5. Le système 500 comporte un réseau antennaire pentagonal, chaque antenne 501, 502, 503, 504, 505 du réseau alimentant un module de traitement 510 configuré pour exécuter le procédé de goniométrie selon l'invention avec une méthode à haute résolution. Grâce au procédé selon l'invention, il est possible de séparer plus de sources que de signaux à nombre fixé d'antennes. Le module de traitement 510 comprend une chaîne formée respectivement d'un récepteur 511 à cinq voies, d'un convertisseur analogique numérique 512, et d'un calculateur 512.

Par exemple, l'algorithme MUSIC est mis en oeuvre à partir de l'estimation de la matrice de corrélation des signaux interférents (respectivement des signaux utiles) pour estimer les directions d'arrivée des signaux interférents (respectivement des signaux utiles).

Le réseau d'antennes comporte cinq capteurs 501, 502, 503, 504, 505 et cinq voies de réception numérisées en parallèle. Pour le signal DVB-T de l'exemple précédent, les étapes 101 à 105 sont effectuées comme dans l'exemple précédent pour les cinq voies de réception en parallèle.

La matrice de corrélation des signaux interférents est calculée à partir des signaux y(f).

$$Ryy = \sum_{n=1}^{8} \sum_{f=1}^{6817} y[n,f] \cdot y[n,f]^H)$$

Avec $y[n,f] = [y_1[n,f], y_2[n,f], ..., y_k[n,m]]^T$

La matrice de corrélation du signal utile est calculée à partir du vecteur h des estimées de canal :

$$Ruu = \sum_{n=1}^{8} \sum_{f=1}^{6817} h[n,f] \cdot h[n,f]^H)$$

Avec $h[n,f] = [h_1[n,f], h_2[n,f], ..., h_K[n,f]]^T$

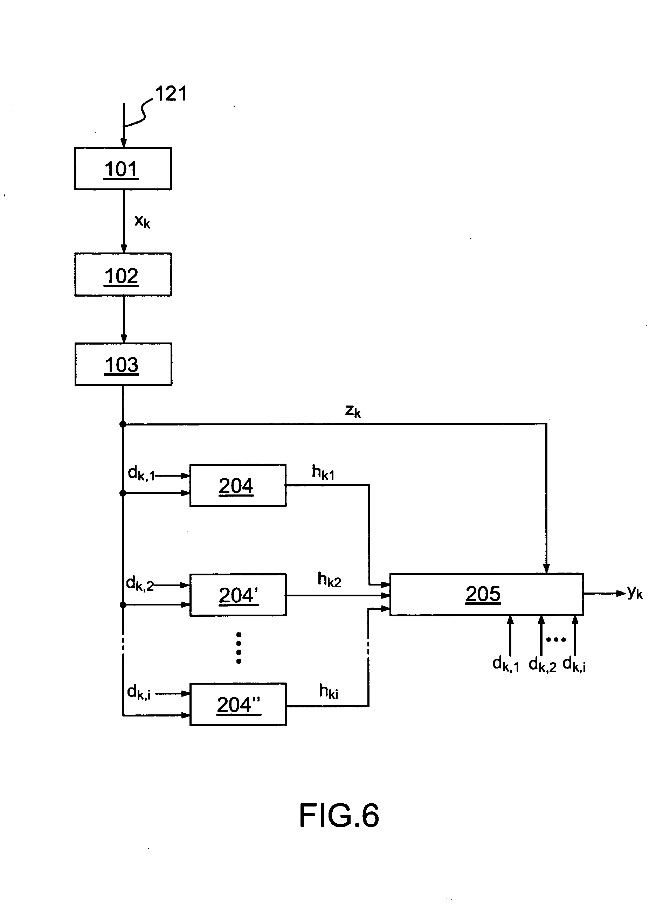

La figure 6 illustre le procédé selon l'invention appliqué à un système de type MIMO. Le signal utile est émis sur plusieurs antennes émettrices.

Dans le cas d'un système de type MIMO, acronyme anglo-saxon pour « Multiple Input, Multiple Output », la quatrième étape 104 et la cinquième étape 105 du procédé sont modifiées de la façon suivante pour tenir compte des signaux émis par les différentes antennes d'émission (les autres étapes restent inchangées).

- La quatrième étape 104 est répétée 204, 204', 204" pour chacune des M voies d'émission utilisées pour émettre le signal utile, de sorte que l'on estime pour chaque voie de réception k, les M canaux de propagation utile $h_{k,m}(f)$ correspondant à chacune des voies d'émission.
- La cinquième étape 105 estime les contributions des signaux interférents obtenus pour chaque voie de réception et pour au moins toutes les sous-porteuses ayant été modulées avec des symboles connus par la formule suivante

$$y_k(n,f) = z_k(n,f) - somme\_sur\_m\ h_{k,m}(f)^*d_m(n,f)$$

où $d_m(n,f)$ correspond au symbole élémentaire utile émis depuis l'antenne m sur la porteuse f et le symbole OFDM n. En général, pour une porteuse f correspondant à un symbole élémentaire connu émis par l'une des antennes d'émission, les autres antennes d'émission n'émettent aucune donnée (porteuse mise à zéro), de sorte que la somme écrite ci-dessus ne comporte qu'un seul terme si on prend en compte les sous-porteuses f correspondant à un symbole élémentaire connu émis par l'une des antennes d'émission.

L'étape 110 de démodulation des symboles élémentaires peut également être effectuée. Dans ce cas, le terme $y_k(n,f)$ peut être estimée sur l'ensemble des sous-porteuses (symboles élémentaires de données et connus).

**Revendications**

1. Procédé de goniométrie pour déterminer la direction d'arrivée de signaux interférant un signal utile à répartition de fréquences orthogonales comportant des symboles élémentaires connus, les signaux comprenant le signal utile et les signaux interférents étant reçus par un réseau d'antennes alimentant au moins deux voies de réception, le procédé comprenant une étape de numérisation (101) des signaux reçus sur chaque voie de réception, une étape de synchronisation (102) sur les symboles dudit signal utile, une étape de démodulation (103) par transformée de Fourier des signaux numérisés, le procédé étant **caractérisé en ce qu'**il comprend, pour un ou plusieurs symboles OFDM issus de ladite transformée de Fourier, les étapes suivantes :

   ◦ estimer (104, 204, 105, 205), pour chaque voie de réception k, pour chaque symbole OFDM d'indice n, au moins pour chaque sous-porteuse f du signal reçu modulée avec des symboles utiles connus, la contribution $y_k(n,f)$ des signaux interférents au signal reçu à partir desdits symboles élémentaires connus, l'étape (104, 105) d'estimation de la contribution $y_k(n,f)$ des signaux interférents comprenant, une première sous-étape (104) d'estimation de la contribution $h_k(f)$ du canal de propagation utile reçu effectuée à partir du signal $z_k(n,f)$ numérisé puis démodulé par transformée de Fourier et des symboles connus utilisés pour moduler le signal utile, puis une deuxième sous-étape (105), effectuée sous-porteuse par sous-porteuse, de retranchement au signal $z_k(n,f)$ numérisé puis démodulé par transformée de Fourier d'une estimation de la contribution du signal utile, calculée à partir de ladite estimation de $h_k(f)$ et des symboles connus ou démodulés;
   ◦ effectuer une goniométrie (106) sur les signaux interférents à partir des estimations de la contribution $y_k(n,f)$ des signaux interférents effectuées lors de l'étape précédente.

2. Procédé de goniométrie selon la revendication 1, le signal utile à répartition de fréquences orthogonales étant émis à partir de plusieurs voies d'émission distinctes, chacune desdites voies d'émission utilisant ses propres symboles connus pour moduler le signal utile émis, **caractérisé en ce que** l'étape (204, 204', 204", 205) d'estimation de la contribution des signaux interférents comprend pour chaque voie d'émission l, une première sous-étape (204, 204', 204") d'estimation de la contribution $h_{k,l}(f)$ du signal utile pour au moins chaque sous-porteuse f du signal reçu modulée avec des symboles connus, pour chaque voie de réception k, à partir du signal $z_k(n,f)$ numérisé puis démodulé par transformée de Fourier et des symboles connus utilisés pour moduler le signal utile sur ladite voie d'émission l, une deuxième sous-étape (205) combinant le signal $z_k(n,f)$ numérisé puis démodulé par transformée de Fourier, les estimations $h_{k,l}(f)$ avec les symboles connus de chacune des voies d'émission correspondantes pour produire une estimation de la contribution des signaux interférents.

3. Procédé de goniométrie selon la revendication 2, **caractérisé en ce que**, pour une voie de réception d'indice k, l'estimation (104) de la contribution $h_k(f)$ du canal de propagation utile est effectuée sur une sous-porteuse d'indice f en déterminant le rapport suivant :

$$h_k(f) \;=\; r_{dzk}(f) \;/\; r_{dd}(f),$$

où

$$r_{dd}(f) = \sum_n d(n,f) \cdot d^*(n,f)$$

et

$$r_{dzk}(f) = \sum_n z_k(n,f) \cdot d^*(n,f) , \quad z_k(n,f)$$

étant le symbole OFDM d'indice n obtenu sur la sous-porteuse d'indice f après démodulation par transformée de Fourier du signal utile à répartition de fréquences orthogonales, $d(n,f)$ étant un symbole connu émis sur la sous-porteuse d'indice f du symbole OFDM $z_k(n, f)$ d'indice n.

4. Procédé de goniométrie selon la revendication 2 ou 3, **caractérisé en ce qu'**il comprend une étape (110) d'estimation des symboles transmis sur les sous-porteuses de données à partir du vecteur signal z reçu sur l'ensemble des K voies de réception et de h(f), le vecteur canal de propagation reçu sur l'ensemble des K voies de réception.

5. Procédé de goniométrie selon l'une des revendications précédentes, **caractérisé en ce que** la puissance reçu des signaux interférents est inférieure à la puissance reçue du signal utile, l'écart de puissance étant compris entre 20 et 25 dB.

**Patentansprüche**

1. Goniometrieverfahren zum Ermitteln der Ankunftsrichtung von Signalen, die ein orthogonales Frequenzmultiplex-Nutzsignal stören, das bekannte Elementarsymbole umfasst, wobei die Signale das Nutzsignal und die von einer Antennengruppe empfangenen Störsignale umfassen, die wenigstens zwei Empfangspfade speist, wobei das Verfahren einen Schritt des Digitalisierens (101) der auf jedem Empfangspfad empfangenen Signale, einen Schritt des Synchronisierens (102) mit den Symbolen des Nutzsignals, einen Schritt des Demodulierens (103) der digitalen Signale durch Fourier-Transformation beinhaltet, wobei das Verfahren **dadurch gekennzeichnet ist, dass** es für ein oder mehrere von der Fourier-Transformation kommende OFDM-Symbole die folgenden Schritte beinhaltet:

   ◦ Schätzen (104, 204, 105, 205), für jeden Empfangspfad k, für jedes OFDM-Symbol von Index n, wenigstens für jeden Subträger f des mit bekannten Nutzsymbolen modulierten empfangenen Signals, des Beitrags $y_k(n, f)$ der Störsignale zu dem empfangenen Signal auf der Basis der bekannten Elementarsymbole, wobei der Schritt des Schätzens (104, 105) des Beitrags $y_k(n, f)$ der Störsignale einen ersten Teilschritt des Schätzens (104) des Beitrags $h_k(f)$ des empfangenen Nutzausbreitungskanals beinhaltet, wobei der Teilschritt auf der Basis der digitalisierten und dann durch Fourier-Transformation demodulierten Signals $z_k(n, f)$ und von bekannten Symbolen durchgeführt wird, die zum Modulieren des Nutzsignals benutzt werden, dann einen zweiten Teilschritt (105), durchgeführt von Subträger zu Subträger, des Abziehens des digitalisierten und dann durch Fourier-Transformation demodulierten Signals $z_k(n, f)$ von einer Schätzung des Beitrags des Nutzsignals, wobei die Schätzung auf der Basis der Schätzung von $h_k(f)$ und der bekannten oder demodulierten Symbole berechnet wird;
   ◦ Ausführen von Goniometrie (106) an den Störsignalen auf der Basis von Schätzungen des Beitrags $y_k(n, f)$ der Störsignale, durchgeführt im vorherigen Schritt.

2. Goniometrieverfahren nach Anspruch 1, wobei das orthogonale Frequenzmultiplex-Nutzsignal von mehreren getrennten Sendepfaden gesendet wird, wobei jeder der Sendepfade seine eigenen bekannten Symbole zum Modulieren des gesendeten Nutzsignals benutzt, **dadurch gekennzeichnet, dass** der Schritt des Schätzens (204, 204', 204", 205) des Beitrags der Störsignale für jeden Sendepfad I einen ersten Teilschritt des Schätzens (204, 204', 204") des Beitrags $h_{k,I}(f)$ des Nutzsignals für wenigstens jeden Subträger f des mit bekannten Symbolen modulierten empfangenen Signals, für jeden Empfangspfad k, auf der Basis des digitalisierten und dann durch Fourier-Transformation demodulierten Signals $z_k(n, f)$ und der bekannten Symbole, die zum Modulieren des Nutzsignals auf dem Sendepfad I benutzt werden, einen zweiten Teilschritt des Kombinierens (205) des digitalisierten und dann durch Fourier-Transformation demodulierten Signals $z_k(n,f)$, der Schätzungen $h_{k,I}(f)$ mit den bekannten Symbolen jedes der entsprechenden Sendepfade beinhaltet, um eine Schätzung des Beitrags der Störsignale zu erzeugen.

3. Goniometrieverfahren nach Anspruch 2, **dadurch gekennzeichnet, dass** für einen Empfangspfad von Index k die Schätzung (104) des Beitrags $h_k(f)$ des Nutzübertragungspfades an einem Subträger von Index f durch Ermitteln des folgenden Verhältnisses durchgeführt wird:

$$h_k(f) \;=\; r_{dzk}(f) \;/\; r_{dd}(f),$$

wobei

$$r_{dd}(f) = \sum_n d(n, f) \cdot d^*(n, f)$$

und

$$r_{dzk}(f) = \sum_n z_k(n, f) \cdot d^*(n, f)$$

sind, wobei $z_k(n,f)$ das OFDM-Symbol von Index n ist, das am Subträger von Index f nach der Demodulation des orthogonalen Frequenzmultiplex-Nutzsignals durch Fourier-Transformation erhalten wurde, wobei d(n,f) ein bekanntes Symbol ist, das auf dem Subträger von Index f des OFDM-Symbols $z_k(n,f)$ von Index n gesendet wurde.

4. Goniometrieverfahren nach Anspruch 2 oder 3, **dadurch gekennzeichnet, dass** es einen Schritt des Schätzens (110) von auf den Datensubträgern gesendeten Symbolen auf der Basis des auf dem Satz von K Empfangspfaden empfangenen Signalvektors z und von h(f), des auf dem Satz von K Empfangspfaden empfangenen Ausbreitungspfadvektors beinhaltet.

5. Goniometrieverfahren nach einem der vorherigen Ansprüche, **dadurch gekennzeichnet, dass** die empfangene Leistung der Störsignale geringer ist als die empfangene Leistung des Nutzsignals, wobei die Leistungsdifferenz zwischen 20 und 25 dB liegt.

**Claims**

1. A goniometry method for determining the direction of arrival of signals interfering with a useful orthogonal frequency division signal comprising known elementary symbols, with the signals comprising the useful signal and the interfering signals being received by an antenna array supplying at least two reception paths, said method comprising a step of digitising (101) the signals received on each reception path, a step of synchronising (102) with the symbols of said useful signal, a step of demodulating (103) the digitised signals by Fourier transform, said method being **characterised in that** it comprises, for one or more OFDM symbols coming from said Fourier transform, the following steps:

   ◦ estimating (104, 204, 105, 205), for each reception path k, for each OFDM symbol of index n, at least for each sub-carrier f of the received signal modulated with known useful symbols, the contribution $y_k(n, f)$ of the interfering signals to the received signal on the basis of said known elementary symbols, said step of estimating (104, 105) the contribution $y_k(n, f)$ of the interfering signals comprising a first sub-step of estimating (104) the contribution $h_k(f)$ of the received useful propagation path, which sub-step is carried out on the basis of the digitised and then by Fourier transform demodulated signal $z_k(n, f)$, and of known symbols used to modulate said useful signal, then a second sub-step (105), carried out on a sub-carrier by sub-carrier basis, of deducting the digitised and then by Fourier transform demodulated signal $z_k(n, f)$ from an estimate of the contribution of the useful signal, which estimate is computed on the basis of said estimate of $h_k(f)$ and of the known or demodulated symbols;
   ◦ performing goniometry (106) on the interfering signals on the basis of estimates of the contribution $y_k(n, f)$ of the interfering signals carried out during the preceding step.

2. The goniometry method according to claim 1, with the useful orthogonal frequency division signal being emitted from a plurality of distinct emission paths, each of said emission paths using its own known symbols to modulate the emitted useful signal, **characterised in that** the step of estimating (204, 204', 204", 205) the contribution of the interfering signals comprises, for each emission path l, a first sub-step of estimating (204, 204', 204") the contribution $h_{k,l}(f)$ of the useful signal for at least each sub-carrier f of the received signal modulated with known symbols, for each reception path k, on the basis of the digitised and then by Fourier transform demodulated signal $z_k(n, f)$ and of the known symbols used to modulate the useful signal on said emission path l, a second sub-step of combining (205) the digitised and then by Fourier transform demodulated signal $z_k(n,f)$, the estimates $h_{k,l}(f)$ with the known symbols of each of the corresponding emission paths so as to produce an estimate of the contribution of the interfering signals.

3. The goniometry method according to claim 2, **characterised in that**, for a reception path of index k, the estimate (104) of the contribution $h_k(f)$ of the useful propagation path is carried out on a sub-carrier of index f by determining the following ratio:

$$h_k(f) \; = \; r_{dzk}(f) \; / \; r_{dd}(f),$$

where

$$r_{dd}(f) = \sum_n d(n,f) \cdot d^*(n,f)$$

and

$$r_{dzk}(f) = \sum_n z_k(n,f) \cdot d^*(n,f) \quad ,$$

with $z_k(n,f)$ being the OFDM symbol of index n obtained on the sub-carrier of index f after demodulation of the useful orthogonal frequency division signal by Fourier transform, d(n,f) being a known symbol emitted on the sub-carrier of index f of the OFDM symbol $z_k(n,f)$ of index n.

4. The goniometry method according to claim 2 or 3, **characterised in that** it comprises a step of estimating (110) symbols emitted on the data sub-carriers on the basis of the signal vector z received on the set of K reception paths and h(f), the propagation path vector received on the set of K reception paths.

5. The goniometry method according to any one of the preceding claims, **characterised in that** the received power of the interfering signals is less than the received power of the useful signal, with the power difference being between 20 and 25 dB.

FIG.1

FIG.2

FIG.3a

FIG.3b

401
403
405
402
404
400
410
420

FIG.4

501
503
505
502
504
510

FIG.5

FIG.6

**EP 2 517 038 B1**

## RÉFÉRENCES CITÉES DANS LA DESCRIPTION

**Documents brevets cités dans la description**

- EP 0991952 A
- US 7289834 B
- EP 0665665 A
- FR 2854290